# EUROPEAN PATENT SPECIFICATION

(11) **EP 2 060 204 B1**
(45) Date of publication and mention of the grant of the patent: **20.10.2010**
(21) Application number: 07022079.3
(22) Date of filing: 14.11.2007
(51) Int. Cl.: A47B 88/14, F16C 29/00, F16C 29/04

(54) **Linear rolling bearing**
Linearwälzlager
Roulement à rouleaux linéaire

(43) Date of publication of application: 20.05.2009
(73) Proprietor: Aktiebolaget SKF, 415 50 Göteborg (SE)
(72) Inventor: Finetti, William, 10040 LA Loggia (TO) (IT); Restivo, Riccardo, 10144 Torino (IT); Pastorino, Matteo, 15011 Acqui Terme (AL) (IT); Gallucci, Francesco, 10040 Volvera (TO) (IT)
(74) Representative: Fioravanti, Corrado

(56) References cited:
- DE-A1-102006 014 906
- US-A- 2 513 522
- US-A- 4 858 293
- US-A- 5 474 378

## Description

The present invention refers to a linear rolling bearing (see, for example, US 2 513 522 A, corresponding to the preamble of claim 1).

Linear rolling bearings of a well-known kind are used in those applications in which a sliding element must be able to slide along a determined rectilinear direction in relation to another guiding element which has relatively low friction values, and are interposed between the sliding element and the guiding element with the possibility of sliding in relation to both or being anchored to either one or the other.

Some well-known applications for the use of linear rolling bearings are, for example, machine tools, such as parallel lathes, or drawers which are to be partially or totally extracted, to which the description which follows will make explicit reference without in any way losing any of its general nature.

Linear rolling bearings suitable for being applied to a removable drawer in order to permit the correct movement of the drawer comprise a support body which extends along a longitudinal axis, a number of housings which are obtained in the support body, and, for each housing, a respective revolving body which is partially inserted inside the relative housing.

The linear bearings present substantially complex structures and are connected to the drawers by means of threaded bodies, but the complexity of the structures and the adoption of the threaded bodies for connection renders such bearings unsuitable for simpler and more cost-effective applications, or rather for applications which require rapid installations, or even disinstallations, and low production costs.

It is, in fact, necessary to underline that linear bearings of the kind which have been described above also require quite complex operations in the case that they have to be disassembled in order to be replaced, and, in some cases, it is even impossible to remove them from their working configuration, so that it is sometimes also necessary, at the same time, to replace the very drawers on which they are assembled.

The aim of the present invention is to produce a linear rolling bearing which will not only be of a structure which is simple and cost-effective to produce, but which will also permit a considerable reduction in the times and costs which relate to assembly and disassembly.

According to the present invention a linear rolling bearing will be produced comprising a support body which extends along a longitudinal axis, a number of housings which are obtained in the support body, and, for each housing, a respective rolling body which is inserted partially inside the relative housing; the linear bearing being characterised by the fact of comprising connecting means for the rapid assembly and disassembly of the linear bearing onto and from a body which can be moved parallel to the longitudinal axis; the connecting means being reversible snap connecting means.

The present invention will now be described with reference to the attached drawings, which illustrate a non-limiting form of embodiment of the present invention, in which:
- FIGURE 1 is a perspective view of a first preferred form of embodiment of a linear rolling bearing produced according to the present invention;
- FIGURE 2 is a plan view, on a reduced scale and with some parts removed for reasons of clarity, of the linear bearing which is shown in FIGURE 1;
- FIGURE 3 is a section along the line III-III in FIGURE 2;
- FIGURE 4 is a lateral elevation view, on an enlarged scale, of a detail which is shown in FIGURE 1;
- FIGURE 5 illustrates, with some parts in section and some parts removed for reasons of clarity, an example of an application of the linear bearing which is shown in FIGURE 1; and
- FIGURE 6 illustrates, with some parts in section and some parts removed for reasons of clarity, an example of an application of a second preferred form of embodiment of the linear bearing which is shown in FIGURE 1.

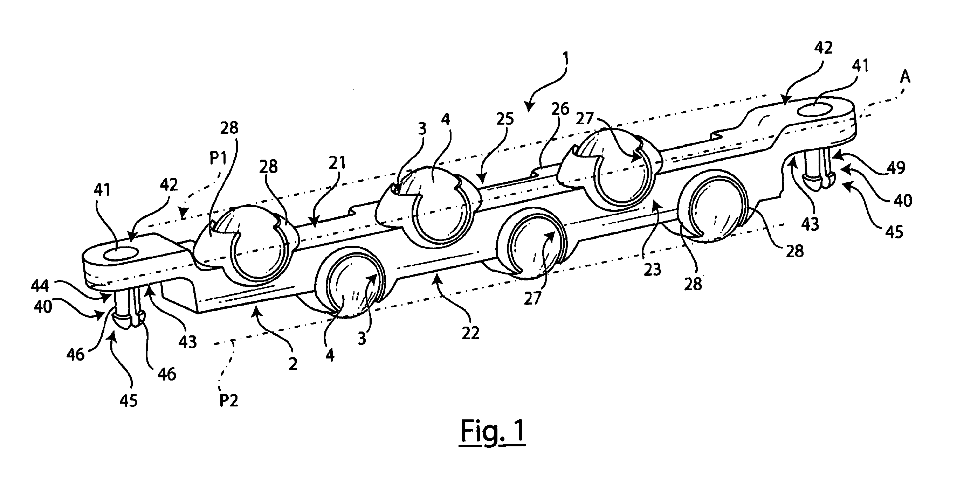

With reference to FIGURE 1, the number 1 refers to a linear rolling bearing in its entirety.

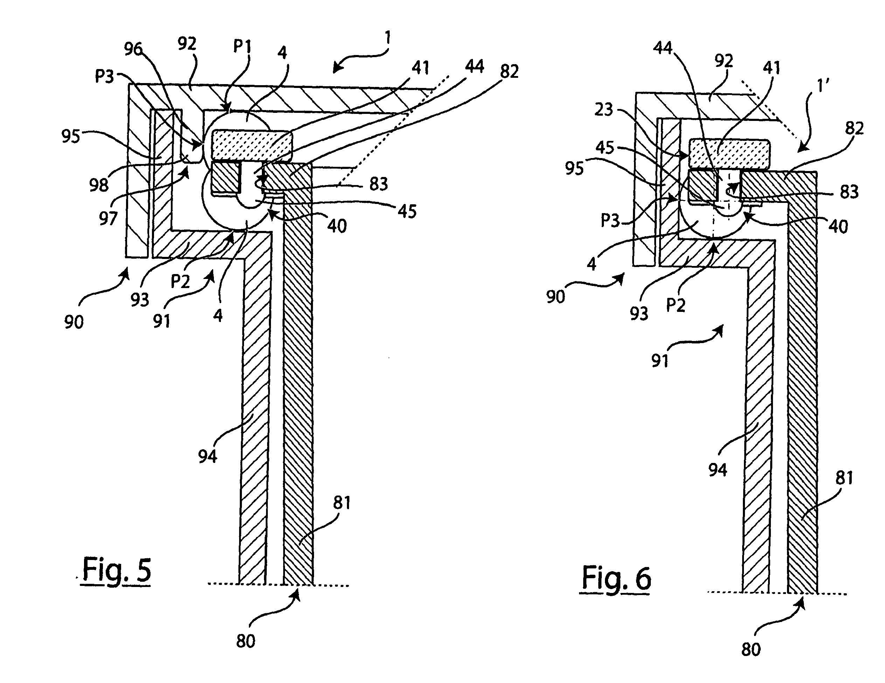

The present description will make specific reference to a linear contact bearing which may be used with drawers which are preferably made of plastic material and which operate in environments which are subject to considerable contamination in terms of dust and liquids. In particular, the present description, with reference to FIGURE 5, will refer to a linear bearing 1 which is suitable for being interposed between a drawer 80 and a lateral guide 90 of the drawer 80 itself in order to permit a regular movement, which is free of any difficulty, of the drawer 80 itself in a direction D which is parallel to the guide 90, or rather transverse to the plane which is illustrated in the drawing which is shown in FIGURE 5.

The drawer 80 comprises a containing cup-shaped body 81, and two lateral borders 82 (only one of which is illustrated), which develop on a horizontal plane in order to support the bearing 1 and which are each provided with two passing holes 83 (only one of which is illustrated), and with a seat (which is not illustrated) which is interposed between the two holes 83 in order to house the bearing 1 itself.

The guide 90, which also has the function of containing the drawer 80, comprises a shaped lateral wall 91, and an upper wall 92 which is arranged in contact with the wall 91. In particular, the wall 91 presents a horizontal slide plane 93 which extends in the direction D, and two transverse portions 94 and 95 which are connected to the plane 93 and of which the portion 94 is an inner portion which directly faces the cup-shaped body 81 of the drawer 80, while the portion 95 is an outer portion and is laterally delimited by the plane 93.

The wall 92 is arranged parallel to the plane 93, and presents a transverse septum 96, which develops parallel to the direction D, and is arranged facing the portion 95 and is in proximity to the portion 95 itself. The septum 96 extends from the wall 92 towards the plane 93 to a length which is less than a height of the portion 95, and, however, as far as a level which is substantially equal to that which is occupied by the lateral border 82 in order to leave a gap 97 between an own final end border 98 and the plane 93.

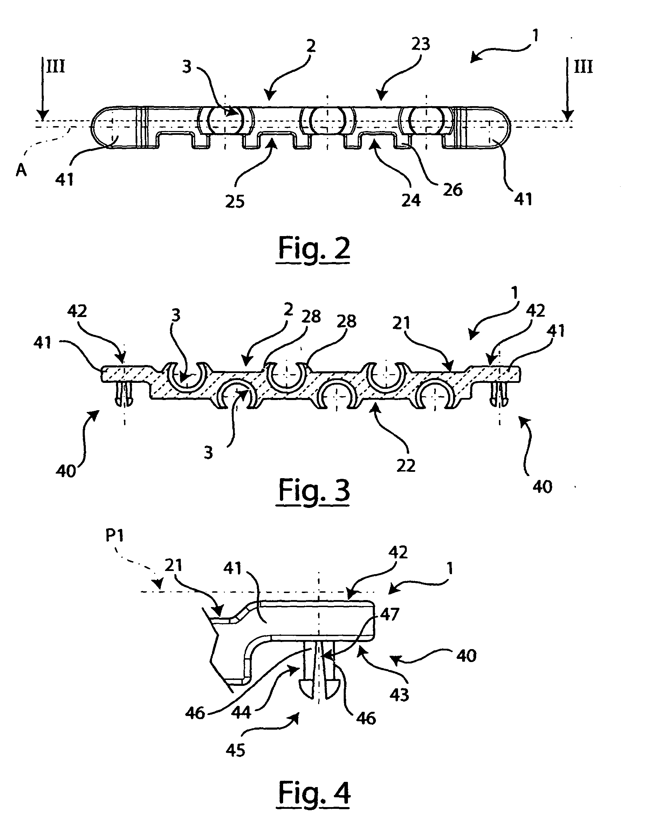

According to that which is illustrated in figures 2 and 3, the bearing 1 comprises a support body 2 which extends along a longitudinal axis A, a number of housings 3 which are obtained in the body 2, and, for each housing 3 a respective rolling ball 4 which is inserted partially inside the relative housing 3.

The body 2 is delimited at the top by an upper surface 21, and is delimited at the bottom by a lower surface 22, and the two surfaces 21 and 22 are parallel in relation to each other and transverse to a lateral surface 23 which delimits the body 2 from the part which is arranged outside the drawer 80.

The body 2 is, in addition, delimited from the part which is arranged towards the drawer 80, by a lateral surface 24 which presents a number of seats 25, which are suitable for lightening the body 2 itself, and are alternated with respective abutting teeth 26 which are suitable for defining a natural abutment of the body 2 inside the seat (which is not illustrated) which is in between the holes 83.

In the form of embodiment which is illustrated in FIGURES 1, 2, 3 and 5, the housings 3 are not only obtained through the surface 21, but also through the surface 22, and the housings 3 of the surface 21 are axially staggered along the axis A in relation to the housings 3 of the surface 22. All the housings 3 are open towards the surface 23 in such a way that the balls 4 which are arranged therein may exit not only from the surfaces 21 and 22, but also laterally from the surface 23. In this way, the bearing 1 allows the balls 4 to lean at the same time:
- on the upper part, against to an upper slide plane P1 which is tangent to the upper poles of the balls 4 themselves,
- on the lower part, against to a lower slide plane P2 which is tangent to the lower poles of the balls 4 themselves; and
- laterally, against a lateral slide plane P3 which is tangent to the lateral poles of the balls 4.

In addition, all the housings 3 present a spherical inner shape, and are also equally open inside the seats 25 in such a way as to reduce the revolving friction of the balls 4 inside them Thus, each housing 3 is open on three sides, or rather on the surfaces 21, 23 and 24, or on the surfaces 22, 23 and 24. While, however, on the surfaces 22 and 24, the housings 3 define a simple respective circular window 27, on the surfaces 21 and 22, each housing 3 is provided with two shaped borders 28 which extend from the surfaces 21 and 22 themselves in order to partially wind around the relative ball 4.

The two shaped borders 28 of each housing 3 are laterally delimited by the windows 27 and, thus, are not connected to each other, still with the aim of rendering to a minimum the friction values between the balls 4 and the housings 3, of not stiffening the body 2, and, finally, of rendering the positioning of the balls 4 in the relative housings 3 very fast while being stable and self-retaining.

According to what is illustrated in FIGURE 4, the linear bearing 1 comprises, finally, two connecting elements 40, which permit the rapid assembly and disassembly of the linear bearing 1 onto and off the drawer 80, being able to be inserted inside the holes 83 and being of a reversible snap kind, as well as being produced together with the support body 2.

Each connecting element 40 is arranged in correspondence with a respective flattened end 41 of the body 2 and develops from the part of the body 2 which corresponds to the surface 22.

In particular, each end 41 is delimited from the part of the surface 21 by a respective surface 42 which is in a position which is nearer to the surface 21 than to the plane P1 in order to permit the balls 4 to project beyond the surface 42 itself, and is delimited from the part of the surface 22 by a further surface 43 which is arranged on a plane which is substantially intermediate between the planes P1 and P2.

Each element 40 comprises a pin 44 which is embedded in the relative end 41, and an end head 45 which is arranged in correspondence with a free end of the relative pin 44 and which presents a diameter of dimensions which are greater than the dimensions of a diameter of the relative pin 44. Each pin 44, like each head 45, is divided into two equal portions 46 by a longitudinal cut 47 which confers variable dimensions on the element 40.

In particular, the two portions 46 are elastic and are elastically mobile towards and away from each other permitting both the insertion of the pins 44 into the holes 83 as well as the disinsertion of the pins 44 from the holes 83, or rather permitting the assembly and disassembly of the linear bearing 1 on and from the drawer 80.

The length of each pin 44 is substantially equal to a length of the relative hole 83, so that the relative head 45 can exit from the hole 83 itself and, having a diameter which is also greater than a diameter of the hole 83, may permit the axial blocking of the element 40 in the hole 83 or rather the blocking of the bearing 1 on the drawer 80.

The pins 44, like the whole of the body 2, are produced by moulding plastic material, and the body 2 may be provided with housings 3 for each surface 21 and 22 according to what has been illustrated and thus far described.

With reference once again to FIGURE 5, it should be observed that once the bearing 1 has been assembled on the drawer 80 with the pins 44 snap inserted inside the holes 83, and once the drawer 80 has been inserted into the guide 90, the plane P2 is arranged in contact with and above the plane 93 permitting the support of the drawer 80 itself, and the plane 93 is arranged in contact with the septum 96, the length of which is such, however, as to engage only the balls 4 relative to the surface 21 as the balls 4 the housings 3 of which open towards the surface 22 face towards the gap 97.

Finally, the plane P1 is also arranged in contact with the wall 92 permitting a guide on three sides of each border 82, or rather guaranteeing maximum precision of the guide itself.

As has already been described, the body 2 may be provided with a greater or lesser number of housings 3 for each surface 21 and 22 than the number which is illustrated herein: in particular, FIGURE 6 shows a bearing 1' which is substantially similar to the bearing 1, from which the bearing 1' differs due to the fact that the housings 3 which relate to the surface 21 are totally absent, and the bearing 1' rests on the plane 93 by means of the plane P2 and directly on the portion 95 by means of the plane P3. This is, thus, a simplified version of the bearing 1 which is suitable for supporting the drawer 80 and for guiding it laterally.

Both the bearing 1, and the bearing 1', given their simple characteristics in terms of construction, assembly and installation, may also be validly used for drawers which contain detergents in washing machines: traditionally, in these applications, in fact, the border 82 of the drawers 80 is directly arranged in contact with the guide 90 and such contact is of a sliding nature as, considering the use which is made of powder detergent, after a short time the sliding action of the drawer 80 becomes somewhat compromised due to wear in the parts which are in contact with each other and due to the presence of the powder detergent. The use in this application of the bearing 1 or 1' increases the sliding capacity of the drawer 80 in relation to the guide 90, as well as the working life of the surfaces in question.

In addition, in the unfortunate hypothesis that there is any eventual seize of the bearing 1 or 1', its eventual replacement is rendered extremely rapid by the presence of the elements 40.

## Claims

1. Linear rolling bearing (1)(1') comprising a support body (2) which extends along a longitudinal axis (A), a number of housings (3) which are obtained in the support body (2), and, for each housing (3), a respective rolling body (4) which is inserted partially inside the relative housing (3); the linear bearing (1)(1') being **characterised by** the fact of comprising connecting means (40) for the rapid assembly and disassembly of the linear bearing (1)(1') onto and from a body (80) which can be moved parallel to the longitudinal axis (A); the connecting means (40) being reversible snap connecting means.

2. Linear bearing according to Claim 1, **characterised by** the fact that the connecting means (4) are integral with the support body (2).

3. Linear bearing according to Claim 1 or 2, **characterised by** the fact that the said connecting means (40) are arranged in correspondence with respective opposite ends (41) of the support body (2), and comprise a pin (44) of variable dimensions which is embedded in the support body (2) and an end head (45) which is produced on a free end of the pin (44).

4. Linear bearing according to Claim 3, **characterised by** the fact that the pin (44) and the head (45) are defined by two portions (46) which are elastically mobile towards and away from each other.

5. Linear bearing according to any of the preceding Claims whatsoever, **characterised by** the fact that the support body (2) and the connecting means (40) are produced by moulding plastic material.

6. Linear bearing according to any of the preceding Claims whatsoever, **characterised by** the fact that the said housings (3) are self-retaining the rolling bodies (4).

7. Linear bearing according to Claim 6, **characterised by** the fact that the said housings (3) are arranged on a first side (21) of the support body (2).

8. Linear bearing according to Claim 7, **characterised by** the fact that the said housings (3) are also arranged on a second side (22) of the support body (2); the second side (22) being opposite the said first side (21).

9. Linear bearing according to Claim 8, **characterised by** the fact that the housings (3) of the said first side (21) or the said second side (22) are open onto a common third side (23) which is transverse to the said first side (21) or to the said second side (22).

10. Linear bearing according to Claim 9, **characterised by** the fact that the housings (3) of the said first side (21) are arranged axially staggered in relation to the housings (3) of the said second side (22).

## Patentansprüche

1. Linearwälzlager (1) (1'), umfassend einen Stützkörper (2), der sich entlang einer Längsachse (A) erstreckt, mehrere im Stützkörper (2) erhaltene Gehäuse (3) und für jedes Gehäuse (3) einen jeweiligen Wälzkörper (4), der teilweise in dem entsprechenden Gehäuse (3) eingesetzt ist; wobei das Linearlager (1) (1') **dadurch gekennzeichnet ist, dass** es Verbindungsmittel (40) für die schnelle Montage und Demontage des Linearlagers (1) (1') an und von einem Körper (80) umfasst, der parallel zur Längsachse (A) bewegt werden kann; wobei die Verbindungsmittel (40) reversible Schnappverbindungsmittel sind.

2. Linearlager nach Anspruch 1, **dadurch gekennzeichnet, dass** die Verbindungsmittel (40) integral mit dem Stützkörper (2) sind.

3. Linearlager nach Anspruch 1 oder 2, **dadurch gekennzeichnet, dass** die Verbindungsmittel (40) in Übereinstimmung mit jeweiligen gegenüberliegenden Enden (41) des Stützkörpers (2) angeordnet sind und einen Stift (44) mit variablen Abmessungen, der in dem Stützkörper (2) eingebettet ist, und einen an einem freien Ende des Stifts (44) ausgebildeten Endkopf (45) umfassen.

4. Linearlager nach Anspruch 3, **dadurch gekennzeichnet, dass** der Stift (44) und der Kopf (45) durch zwei Teile (46) definiert werden, die elastisch aufeinander zu und voneinander weg beweglich sind.

5. Linearlager nach einem der vorhergehenden Ansprüche, **dadurch gekennzeichnet, dass** der Stützkörper (2) und die Verbindungsmittel (40) durch Formen von Kunststoffmaterial hergestellt werden.

6. Linearlager nach einem der vorhergehenden Ansprüche, **dadurch gekennzeichnet, dass** die Gehäuse (3) die Wälzkörper (4) selbst haltend machen.

7. Linearlager nach Anspruch 6, **dadurch gekennzeichnet, dass** die Gehäuse (3) auf einer ersten Seite (21) des Stützkörpers (2) angeordnet sind.

8. Linearlager nach Anspruch 7, **dadurch gekennzeichnet, dass** die Gehäuse (3) auch auf einer zweiten Seite (22) des Stützkörpers (2) angeordnet sind; wobei die zweite Seite (22) der ersten Seite (21) gegenüberliegt.

9. Linearlager nach Anspruch 8, **dadurch gekennzeichnet, dass** die Gehäuse (3) der ersten Seite (21) oder der zweiten Seite (22) in einer gemeinsamen dritten Seite (23) münden, die quer zur ersten Seite (21) oder zur zweiten Seite (22) verläuft.

10. Linearlager nach Anspruch 9, **dadurch gekennzeichnet, dass** die Gehäuse (3) der ersten Seite (21) bezüglich der Gehäuse (3) der zweiten Seite (22) axial versetzt angeordnet sind.

## Revendications

1. Roulement à rouleaux linéaire (1) (1') comprenant un corps de support (2) qui s'étend le long d'un axe longitudinal (A), un certain nombre de boîtiers (3) qui sont réalisés dans le corps de support (2), et, pour chaque boîtier (3), un corps de rouleau respectif (4) qui est inséré partiellement à l'intérieur du boîtier relatif (3) ; le roulement linéaire (1) (1') étant **caractérisé par le fait qu'**il comprend des moyens de connexion (40) pour l'assemblage et le désassemblage rapides du roulement linéaire (1)(1') sur et depuis un corps (80) qui peut être déplacé parallèlement à l'axe longitudinal (A) ; les moyens de connexion (40) étant des moyens de connexion par encliquetage réversibles.

2. Roulement linéaire selon la revendication 1, **caractérisé par le fait que** les moyens de connexion (4) sont intégrés au corps de support (2).

3. Roulement linéaire selon la revendication 1 ou 2, **caractérisé par le fait que** lesdits moyens de connexion (40) sont agencés en correspondance avec des extrémités opposées respectives (41) du corps de support (2), et comprennent une goupille (44) de dimensions variables, qui est noyée dans le corps de support (2) et une tête d'extrémité (45) qui est réalisée sur une extrémité libre de la goupille (44).

4. Roulement linéaire selon la revendication 3, **caractérisé par le fait que** la goupille (44) et la tête (45) sont définies par deux portions (46) qui sont déplaçables élastiquement l'une vers l'autre et à l'écart l'une de l'autre.

5. Roulement linéaire selon l'une quelconque des revendications précédentes, **caractérisé par le fait que** le corps de support (2) et les moyens de connexion (40) sont réalisés par moulage de matière plastique.

6. Roulement linéaire selon l'une quelconque des revendications précédentes, **caractérisé par le fait que** lesdits boîtiers (3) retiennent automatiquement les corps de rouleaux (4).

7. Roulement linéaire selon la revendication 6, **caractérisé par le fait que** lesdits boîtiers (3) sont agencés sur un premier côté (21) du corps de support (2).

8. Roulement linéaire selon la revendication 7, **caractérisé par le fait que** lesdits boîtiers (3) sont également agencés sur un deuxième côté (22) du corps de support (2) ; le deuxième côté (22) étant opposé audit premier côté (21).

9. Roulement linéaire selon la revendication 8, **caractérisé par le fait que** les boîtiers (3) dudit premier côté (21) ou dudit deuxième côté (22) sont ouverts sur un troisième côté commun (23) qui est transversal audit premier côté (21) ou audit deuxième côté (22).

10. Roulement linéaire selon la revendication 9, **caractérisé par le fait que** les boîtiers (3) dudit premier côté (21) sont agencés axialement de manière décalée par rapport aux boîtiers (3) dudit deuxième côté (22).
